(19) Europäisches Patentamt European Patent Office Office européen des brevets

(11) **EP 3 658 970 B1**

(12) **EUROPEAN PATENT SPECIFICATION**

(45) Date of publication and mention of the grant of the patent:
**28.08.2024 Bulletin 2024/35**

(21) Application number: **18765494.2**

(22) Date of filing: **25.07.2018**

(51) International Patent Classification (IPC):
**G02B 6/28** (2006.01)     **H04L 9/32** (2006.01)

(52) Cooperative Patent Classification (CPC):
**H04L 9/3278; H04L 9/0866;** G02B 6/28

(86) International application number:
**PCT/IB2018/055546**

(87) International publication number:
**WO 2019/021206 (31.01.2019 Gazette 2019/05)**

(54) **OPTICAL PHYSICAL UNCLONABLE FUNCTION BASED ON MULTIMODE OPTICAL WAVEGUIDE**

OPTISCHE PHYSIKALISCHE UNKLONBARE FUNKTION AUF DER BASIS EINES MULTIMODALEN OPTISCHEN WELLENLEITERS

FONCTION PHYSIQUE OPTIQUE NON CLONABLE BASÉE SUR UN GUIDE D'ONDES OPTIQUE MULTIMODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.07.2017 GR 20170100352**

(43) Date of publication of application:
**03.06.2020 Bulletin 2020/23**

(73) Proprietor: **Eulambia Advanced Technologies Ltd 15342 Ag. Paraskevi (GR)**

(72) Inventors:
• **MESARITAKIS, Charis**
  **17455 Alimos (GR)**
• **SYVRIDIS, Dimitris**
  **15561 Cholargos (GR)**

(74) Representative: **Samouilidis, Emmanouil Alkyonis 46 175 62 Palaio Faliro (GR)**

(56) References cited:
**EP-A1- 2 693 685**

• **SEBASTIANUS A GOORDEN ET AL: "Quantum-Secure Authentication with a Classical Key", 1 March 2013 (2013-03-01), XP055168644, Retrieved from the Internet <URL:http://arxiv.org/abs/1303.0142> DOI: 10.1364/OPTICA.1.000421**
• **YARON BROMBERG ET AL: "Remote Key Establishment by Mode Mixing in Multimode Fibres and Optical Reciprocity", ARXIV.ORG, CORNELL UNIVERSITY LIBRARY, 201 OLIN LIBRARY CORNELL UNIVERSITY ITHACA, NY 14853, 25 June 2015 (2015-06-25), XP091016932, DOI: 10.1117/1.OE.58.1.016105**
• **LYUBOV ET AL.: "Rotational memory effect of a multimode fiber", OPTICS EXPRESS, vol. 23, no. 16, 28 July 2015 (2015-07-28), pages 20569 - 20575**
• **BRÜNING ET AL.: "Rapid measurements of the fiber's transmission matrix", PROCEEDINGS OF THE SPIE, NEXT-GENERATION OPTICAL COMMUNICATION: COMPONENTS, SUB-SYSTEMS AND SYSTEMS IV, vol. 9389, 93890N, 7 February 2015 (2015-02-07), pages 1 - 7, XP002786602**

**Description**

The present invention is related to a security device and a method suitable for generating challenge-response pairs for authentication and cryptographic application. In particular the invention refers to a security device and a method that use a multimode optical waveguide.

Optical Physical Unclonable Functions like systems have been introduced in the works of [Pappu, R.: Physical One-Way Functions. PhD thesis, MIT (2001); Pappu, R., Recht, B., Taylor, J., Gershenfeld, N., Physical One-Way Functions, Science 297, pp. 2026-2030 (2002)]. This initial work has been followed by similar approaches that consisted in speckle detection in randomly arranged materials like plain paper [Buchanan, J. D. R., Cowburn, R. P., Jausovec, A., Petit, D., Seem, P., Xiong, G., Atkinson, D., Fenton, K., Allwood, D.A., Bryan, M. T., Forgery: 'fingerprinting' documents and packaging, Nature, Brief Communications 436, pg. 475 (2005)], silica diffusers [Rührmair, Ulrich, et al. "Revisiting Optical Physical Unclonable Functions." IACR Cryptology ePrint Archive 2013 (2013): 215.] or monitoring phosphor patterns [Chong, C. N., Jiang, D., Zhang, J., Guo, L., Anti-counterfeiting with a random pattern, SECURWARE 2008, pp. 146-153, IEEE, Los Alamitos (2008)]. More advanced optical techniques include surface random distribution plasmon resonances [Smith, A. F., Patton, P. & Skrabalak, S. E. Plasmonic Nanoparticles as a Physically Unclonable Function for Responsive Anti-Counterfeit Nanofingerprints. Adv. Funct. Mater. 26, 1315-1321 (2016)].

WO 2007/046018 describes an optical Physical Unclonable Function (abbreviation o-PUF) with a combined sensor and display. Incident light is scattered by a light scattering element, comprising a material which contains randomly distributed light scattering particles, so that a random speckle pattern is created and detected from light detection elements. The key idea of WO 2007/046018 A1 is to include reflecting picture elements into the device so that it becomes possible to modify applied challenges by activating and switching off the picture elements, thereby also modifying the corresponding response/speckle pattern. The disclosed device does not include a multimode waveguide.

US 2006/0095773 describes an authentication device, and an authentication method in which is applied an emission-angle dependent light emitting device and a corresponding emission-angle dependent light detector. The disclosed device heavily relies on beam steering schemes for the generation of unique challenges, thus compromising system's resilience to mechanical vibrations. The disclosed device does not include a multimode waveguide.

WO 2005/059629 describes an optical method and a device for detection of a speckle pattern and focuses on the definition of criteria employed to determine the size of pixels of a detector that will give rise to detection of all relevant bits (i.e., the pixels are small enough) without too much redundancy (i.e., the pixels are large enough). The disclosed device does not use multimode waveguides.

WO 98/28707 describes a method and a device for enhancing the integrity of visual authentication. The illumination of an object is modulated for hindering attacks by replaying recorded images. The object is no PUF.

EP 2693685 describes a device and method for verifying challenge - response pairs. In this case, the principle of operation resides in the quantum properties of a few-photon emitter, a challenge creating device and a photon counting detector. The proposed system is quantum secure and as such, miniaturization is hindered whereas the utilized equipment is more sophisticated than non-quantum counterparts therefore it is not disposable. The disclosed device does not include multimode waveguides

WO 2007/046037 describes a device and method of an optical scatter-based PUF system that separates the detecting elements from the PUF specimen thus allowing speckle size optimization, offering resilience against playback attacks. The disclosed device does not employ multimode waveguides.

US 2015/0215115 describes an optical unclonable function device and a related method that uses a ring resonator realized as a single optical token and used for at least part of a key generation. The proposed device consists of a single unit, is resonant therefore targets single mode waveguides, and its operation principle relies on frequency drifts of the optical resonance.

Gom et al. [Moussa N' Gom, Theodore B. Norris, Eric Michielssen, Raj Rao Nadakuditi. Non-Holographic Method to Compute Transmission Matrix of a Multimode Fiber for Mode Control. Frontiers in Optics 2017] discloses a system to compute the transmission matrix of a multimode fiber (MMF) that links the input fields to the output fields of a multimode fiber of a telecommunication system. The system of Gom at al. uses a spatial light modulator that controls the phase input of the MMF, which is constant over each superpixel, so as to find the optimum set of phases for each superpixel that produces the desired output. The multimode fiber is a 2 meter long silicon fiber with a core diameter of 50 $\mu$m.

The device of Gom et al. comprises a coherent light source, input creating means configured to control the phase of an incoming coherent light to create an optical input, first imaging means configured to image the coherent light at the input creating means, a multimode fiber with silicon core, which generates an optical response, through propagation of the optical input in an optical multimode fiber, second imaging means configured to image the altered coherent light at the multimode fiber and an optical detector configured to detect the spatial profile and intensity of the light transmitted through the multimode fiber. Such silicon multimode fibers are used in telecommunication applications (networks); usually they have cleaved and polished facets so as to minimize losses and support limited number of transverse modes, therefore are not suitable for cryptographic applications. The absence of facet processing, the limited number of modes and the use of a strictly single-mode laser source enables even the partial extraction of the transfer matrix of the system. Brüning et al. ⌈Brüning, R., Flamm, D., Ngcobo, S.S., Forbes, A., Duparré, M. Rapid measurements of the fiber's transmission matrix. Proc. SPIE 9389, Next-Generation Optical Communication: Components, SubSystems and Systems IV, 93890N (7 February 2015) also discloses a system to compute the transmission matrix of a multimode fiber (MMF) with a core diameter of 30 $\mu$m. Amitonova et al., Optics Express 20, pages 20569 - 20575, 2015 examines the multimode transmission matrix of a multimode fibre having around 1500 propagating modes and proposes to use such a fibre for quantum secure authentication.

An object of the invention is to provide a device and method for challenge-response pair generation, suitable for authentication. A further object of the invention is to provide a device and a method for cryptographic key generation, and other cryptographic applications. A further object of the present invention is to provide a device and a method for authentication and/or cryptographic key generation that will be easily miniaturised, and resilient against modelling and playback attacks, and will offer increased performance over the known devices and methods. A further object of the invention is a method of production of such a device.

The invention is defined in the independent claims. The depended claims define features that offer further advantages when combined with the features of the claims from which they depend.

A device for generating one or more optical challenge - optical response pairs suitable for authentication and cryptographic key generation according to the invention comprises: a) a coherent light source to generate a coherent light excitation having an intensity, a phase, a polarization and a spatial distribution, b) challenge creating means configured to alter the intensity and/or the phase and/or the polarization and/or the spatial distribution of the coherent light to create an optical challenge, c) first imaging means configured to guide the coherent light at the challenge creating means, d) an optical Physical Unclonable Function specimen with a multimode optical waveguide with a scrambling mechanism in the form of random defects on the input facet, which optical Physical Unclonable Function specimen is configured to generate an optical response, through propagation of the optical challenge and excitation of random transverse optical modes suitable for authentication and cryptographic key generation in the waveguide, e) second imaging means configured to guide the optical challenge at the optical Physical Unclonable Function specimen and f) an optical detector configured to detect the spatial profile and intensity of the optical response.

A method for generating one or more challenge-response pairs comprises the steps of: a) generating a coherent light excitation with a coherent light source, b) creating an optical challenge by illuminating at least a part of challenge creating means with the coherent light, c) imaging the optical challenge to an input element of an optical Physical Unclonable Function specimen with a multimode optical waveguide with a scrambling mechanism in the form of random defects on the input facet, d) creating an optical response by transmission of the optical challenge through the optical Physical Unclonable Function specimen and by excitation of random transverse optical modes, e) detecting all or part of the response by an optical detector and g) establishing a challenge-response pair for authentication and/or cryptographic key generation. The coherent light source may be configured to emit simultaneously at one or more centre frequencies.

The present invention employs a Physical Unclonable Function (abbreviation: PUF) specimen in the form of a photonic or an optical Physical Unclonable Function (abbreviation: o-PUF) specimen. The propagation of the optical challenge through the o-PUF specimen generates an optical response that in combination with the optical challenge is a unique pair suitable for authentication and cryptographic key generation

The objects of the invention are made possible by comprising an optical system that incorporates a highly complex random physical mechanism that hinders replication. At the same time, although relying on a single light source, it is equivalent to a typical scatter-based o-PUF that is simultaneously challenged (illuminated) by millions of phase locked lasers, due to the guiding the guiding of a high number of transverse optical modes in the o-PUF specimen. Additionally, the device's response, contrary to previous implementations, simultaneously depends on multiple scrambling mechanisms that cannot be replicated or even monitored by a malicious manufacturer providing increased resilience against replications and modelling attacks.

A method of production of a device according to the independent claim 1 for generating at least one optical challenge-optical response pair according to the invention includes a) providing a coherent light source and a multimode optical waveguide with a facet, a core, a cladding and a core-cladding interface, b) generating random defects to said facets by a mechanical process and/or chemical process and/or thermal process and/or laser ablation and c) obtaining the device that includes said coherent light source and said waveguide. Such a device comprises a optical Physical Unclonable Function specimen with a multimode optical waveguide.

The invention provides a device and method for challenge-response pair generation that can overcome the disadvantages of known devices and methods and provide increased performance in terms of security. The invention suggests a secure device that is based on a physical unclonable function comprising an optical multimode waveguide with a set of random defects spread randomly at the facets, core, cladding and core-cladding interface of the optical physical unclonable function's specimen. The disclosed optical physical unclonable function (o-PUF) device and method offers increased performance and resilience against playback and modelling attacks, and can be used for implementing one-token or more than one-token security schemes.

The first imaging means may be configured to project and/or resize the spatial profile of the coherent light on a surface of the challenge creating means and the second imaging means may be configured to project and/or resize the optical challenge to the optical Physical Unclonable Function specimen.

Optionally, the challenge creating means comprises one or more distinct elements or pixels, configured to affect the intensity and/or the phase and/or the polarization of the coherent light and preferably the intensity and/or the polarization and/or the spatial distribution of the coherent light.

The optical detector may comprise one or more elements configured to partially or completely capture the spatial profile of the optical response that exits the optical Physical Unclonable Function specimen.

The invention offers increased performance and resilience against playback attacks that are hindered through the use of an optical multi-pass cavity. A device and a method according to the invention have no need for light modulation parts and does not rely on pseudo-random processes.

In an embodiment, the present invention provides a device according to claim 1 for generating one or more challenge-response pairs which includes a coherent light source, a challenge creating device that is configured to create an optical challenge, an o-PUF specimen based on transverse multimode optical waveguide and an optical detector configured to acquire the optical response. In another embodiment, the device comprises a two-token system that hinders playback attacks through a multi-pass configuration including the device according to claim 1. Such embodiments may include a ring cavity with one or more optical couplers in addition to the optical waveguide. In another embodiment, the aforementioned device's challenges are combined with biometric readings aiming to create a two-token security scheme.

The optical physical unclonable function comprises an optical system that is equipped with a highly complex random physical mechanism that hinders device replication. An external stimulus, i.e. the optical challenge, is applied and an optical response is acquired from the o-PUF. The responses of the system may be easy to evaluate but impossible to predict-mimic or reverse engineer. Therefore, such an optical device could be used, as an independent module or as part of a larger cryptosystem, in anti-counterfeiting applications, for deterministic pseudo-random generation, and for authentication of cyber or physical access. Thus the present invention is an excellent anti-counterfeiting devices, to hardware modules for pseudo-random cryptographic key generation, to Physical Unclonable Function specimens and in particular to the optical Physical Unclonable Function specimens.

The proposed o-PUF specimen is an optical waveguide (integrated or bulk) that allows the low-loss guiding of a high number of transverse optical modes. These modes have varying propagation constants so they experience a stable phase velocity difference. In typical implementations, performance in terms of unclonability or unpredictability, depends on the number of coherent phase locked illumination sources [Rührmair, Ulrich, et al. "Revisiting Optical Physical Unclonable Functions." IACR Cryptology ePrint Archive 2013 (2013): 215.]. A device according to the present invention, although relies on a single coherent light source, it is equivalent to a typical scatter based optical PUF that is simultaneously challenged (illuminated) by millions of phase locked lasers. This provides a significant performance enhancement.

The device's response, contrary to previous implementations, simultaneously depends on one or more multiple scrambling mechanisms. Random defects at the input facet allow the random excitations and power distribution among a random number of transverse optical modes. Defects and/or nonlinear elements spread along the propagation axis, allow intermodal coupling in a random manner, while these defects cannot be replicated or even monitored by a malicious manufacturer. Defects are generated intentionally through any random process, for example mechanical and/or chemical and/or thermal process and/or laser ablation.

The device utilizes two imaging systems that can affect the spatial overlap of the discrete optical challenges at the o-PUF specimen's input and control the portion of the speckle projected at the detector. This enables the tuning of the speckle's feature's size and negates the linear relation between challenge-response pairs.

The combination of the disclosed device with biometric data, like fingerprints, eye iris etc., provides a two-token security system, so that challenge-response pair generation depends on the correct combination of the user's biometrics and the o-PUF specimen; something that the user is (biometric) and something that the user has (o-PUF specimen). To that end the device may have means to input the biometric token. The biometric token may interact with the optical challenge prior to transmission of the optical challenge to the optical Physical Unclonable Function specimen by any means for example by reflection and/or scattering and/or absorption.

Another embodiment of the device comprises a two-token system that allows the response to be scrambled multiple times through multiple passes through the o-PUF specimens arranged in a device according to claim 1. Therefore, an attacker should simultaneously possess both tokens (o-PUF specimens) in order to generate a valid challenge-response pair. This multi-pass embodiment hinders playback and modelling attacks. A two-token device may be implemented with a optical Physical Unclonable Function specimen that comprises a ring cavity with one or two an optical couplers and an optical waveguide. The waveguide may be a replaceable key.

The present invention is described in greater detail below, on the basis of embodiments and of the drawings in which:

FIGURE 1 Schematic depicting all building blocks of the disclosed device

FIGURE 2 Schematic presenting the optical waveguide that is used as the o-PUF specimen (circular cross section is used only as an example)

FIGURE 3 Schematic of an embodiment of the o-PUF specimen comprising two parts in a notch ring cavity

FIGURE 4 Schematic of an embodiment of the o-PUF specimen comprising two parts in an add-drop ring cavity

FIGURE 5 Schematic depicting all building blocks of the disclosed device in the case that a biometric token is included

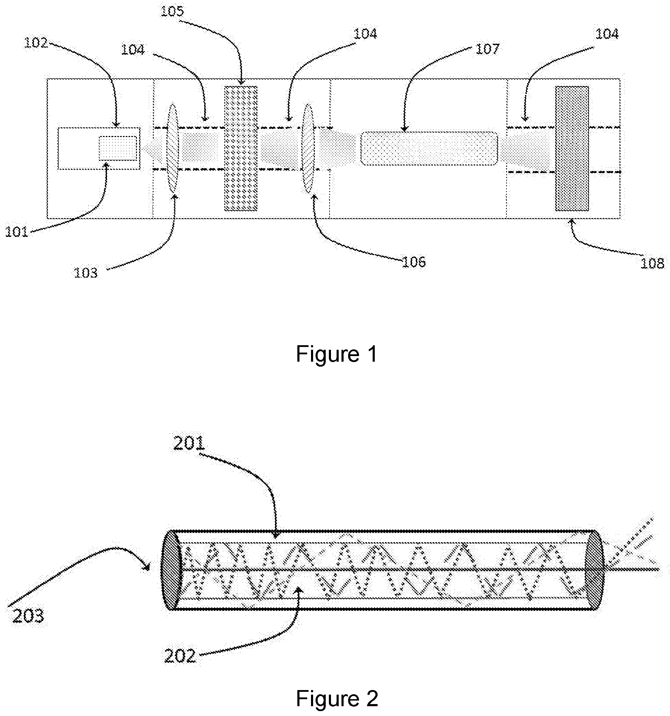

**Figure 1** shows schematically an embodiment of a device for generating one or more challenge-response pair according to the invention. The device of **Figure 1** comprises:

- a coherent light source **101** that emits a coherent light;
- a first imaging system **103** that guides and images light to a challenge creating means **105;**
- a challenge creating means (CCM) **105** for creating an optical challenge;
- a second imaging system **106** that guides and images light to the optical Physical Unclonable Function specimen **107;**
- an optical Physical Unclonable Function specimen **107** based on a multimode optical waveguide;
- a detector **108** for reading out the optical response of the optical Physical Unclonable Function specimen.

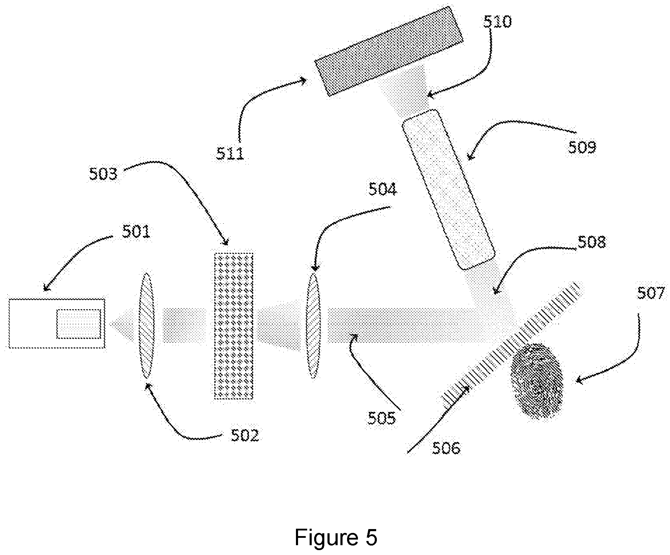

In the embodiments of the present invention that are presented in **Figures 1 and 5,** the light source **101, 501** is a coherent light source. By the term "coherent light source" we refer to a source of light with narrow spectral linewidth able to create a high-contrast-speckle pattern, for example, a laser. Every type of laser can be used for example diode lasers, solid-state lasers, metal-vapour lasers, semiconductor lasers, gas lasers, chemical lasers, dye-lasers. The emitted laser's frequency can also range from the deep-UV to FIR, with no limitation; nonetheless it is preferable to use near infrared (NIR) or visible (VIS) frequencies so as to enable efficient interaction-guiding with fibre-based o-PUF specimens and the use of commercially available optical detectors.

In an embodiment of the present invention the coherent light source can emit a single frequency that can be varied through various frequency tuning mechanisms, like current modulation, Vernier effects, thermal modulation, inclusion of tuneable optical filters in the laser's cavity, optical injection, or similar mechanisms. In another embodiment, the laser may emit simultaneously at two or more frequencies for example a Fabry-Perot cavity, a ring resonator or equivalent, which in turn can be also tuned through the aforementioned techniques. When the laser may emit simultaneously at two or more frequencies, the laser acts individually or complimentary with the challenge creating means.

The laser source **101** may include a passive or active cooling mechanism 102 that allow the thermal stabilisation of the device and enable frequency/intensity stabilization.

In the embodiments of **Figures 1 and 5,** one or more optical elements **103, 502** are used so as to image the emitted spatial distribution of the coherent light to the challenge creating means **105, 503.** The optical elements can be lenses, achromatic lenses, micro-lenses, liquid crystals, array of lenses (optical objectives or similar) or equivalent. In an embodiment, the imaging system can be able to move in one or more directions (axes), through a mechanical motor, a piezoelectric element or electromechanical motor. The embodiment of **Figure 1** has rails **104** in one or more axes can be imprinted on the device chassis to reduce mechanical vibrations and misalignments. These embodiments can allow the collimation/magnification of the laser's beam diameter aiming to adjust the spot size that is imaged on the challenge creating means. The necessary displacement of the imaging system depends on the type of lens and lens properties, like focal length, desired magnification etc. as well as the exact beam diameter and divergence of the coherent light source; following the equation of thin lenses the desired magnification factor can be roughly estimated by $1/d_0 + 1/d_i = 1/f$ and $d_i/d_0 = m$, where $d_i$ and $d_0$ are the image and object distance respectively, $f$ is the focal length and m is the magnification factor.

In an embodiment of the present invention, the challenge creating means **105, 503** comprises a light modulator of one or more optical elements (pixels or equivalent) able to vary one or more properties of the incoming coherent light beam. Such embodiments are presented in **Figures 1 and 5.** In an embodiment, the challenge creating means element(s) can alter the intensity and/or polarization and/or phase and/or propagation direction of the incoming light beam. Each variation of the incoming optical beam's characteristics, individually or combined, create a different optical challenge. In turn, the interaction of the optical challenge with the o-PUF specimen **107, 509** will allow the generation of an optical response and thus of a unique challenge-response pair. The magnitude of the induced variations in the coherent light beam, is directly linked to the level of similarity of the generated responses, in terms of standard metrics like cross correlation, Euclidean distances etc.

In an embodiment, the challenge creating means **105, 503** comprises a spatial light modulator based on liquid crystals or equivalent and thus acts as a secondary single or multiple element coherent light source able to alter the intensity and/or phase of the light of one or more elements. The number of elements in the challenge creating means affects the size of the challenge space; in an embodiment, in which the challenge creating means comprises N pixels that can be switched on or off (maximum or minimum transmittance), the number of optical challenges is $2^N$. In the case that intensity can attain C discrete states the challenge space is equal to $C^N$. In the general case, where multiple characteristics M (polarization, intensity etc.) can be altered at each element (N) and its characteristic has $C_i$ discrete states then the challenge space escalates to $\prod_i^M (C_i)^N$.

In an embodiment where the spot-size of the coherent light source on the surface of the challenge creating means **105** can be adjusted, for example by optical means such as lenses and/or mechanical means such as rails **104** and/or by any other means, the number of challenge creating means elements that will form the optical challenge can be adjusted as well, thus allowing a varying challenge space. If the coherent light source's frequency can be tuned, the challenge space can be further increased. In the case that V discrete frequencies can be generated by the light source then challenge space is calculated by $V * \prod_i^M (C_i)^N$. These embodiments allow the generation of an exponentially increasing pool of available optical challenges.

In an embodiment of the present invention one or more optical elements **106, 504** are used so as to partially or completely guide the challenge creating means elements to the o-PUF specimen and adjust a predefined area of the output of the challenge creating means **105, 503** to the input surface of the o-PUF specimen **107, 509,** see as examples **Figures 1 and 5.** In an embodiment, the challenge creating means **105, 503** comprises one or more elements (pixels or equivalent), therefore the imaging system aims at projecting one or more elements on the surface of o-PUF specimen **107, 509.** Following the law of Abbe $d = \lambda/2nsin\theta$, where $\lambda$ is the wavelength of the coherent light source, and $nsin\theta$ is the numerical aperture, the aforementioned embodiment can be used, through variation of the imaging system's characteristics (numerical aperture, magnification, focal length, distance between the o-PUF specimen's input and challenge creating means **105, 503** so as to enable diffraction patterns (like Airy disks or equivalent) to be imaged or not at the o-PUF specimen's surface. In an embodiment, the spatial overlap of the distinct challenge creating means elements images on the surface of the o-PUF specimen can be adjusted either through diffraction patterns or through out of focus imaging. The optical elements can be lenses, achromatic lenses, micro-lenses, liquid crystals, array of lenses (optical objectives or similar) or equivalent. In an embodiment, the imaging system can move in one or more directions (axes), through a mechanical/electromechanical system or a piezoelectric element. In an embodiment rails **104** in one or more axes can be imprinted on the device chassis to reduce mechanical vibrations and misalignments.

In an embodiment of the present invention, the o-PUF specimen **107, 509** is a multimode optical waveguide, whose dimensions and material allow the guiding of various transverse optical modes. The optical waveguide comprises a circular cross-section or a cross-section of any shape. The optical waveguide shown in **Figure 2** has a facet **203** and exhibits two different regions with different refractive indices, namely the core **202** with a refractive index $n_1$ and the cladding **201** with a refractive index $n_2$. The spatial distribution of the electric and magnetic field is computed through Maxwell's equations with specific boundary conditions based on the refractive indices and the cross-section of the waveguide. In the case of a cylindrical waveguide, optical fibre or equivalent, the spatial distributions of the electric field (and similarly for the magnetic field) propagating in the z-axis in cylindrical coordinates is given by $E_i(r,\varphi,z) = A_i(r,\varphi)e^{j(\omega t - \beta_i z)}$, where $A_i$ is the spatial distributions of the amplitude, $\omega$ is the circular frequency of the coherent source and $\beta_i$ is the propagation constant. Propagation constants are given by $\beta_i^2 = (n_i\omega/c)^2$, where $n_i$ is the effective refractive index and c is the speed of light in vacuum. At first, these modes share the same wavelength ($\lambda=2\pi c/\omega$), matching the frequency of the coherent light source, but each one exhibits a different spatial distribution and different propagation constant, thus each mode exhibits a different propagation delay, for a given waveguide length. If these modes coherently interact at an optical detector they will create a spatial intensity profile, which is governed by the amplitude and phase (electric or magnetic) of each mode after a certain propagation length. In an embodiment that the waveguide permits the simultaneous guiding of a high number of such modes, the generated interference pattern is complex (speckle pattern). The generated interference pattern (speckle) is considered the o-PUF's optical response. The number of modes that will be excited depends on the illumination conditions at the o-PUF specimen's input by the coherent light source **101, 501.** In detail, the overlap integral of each of these modes and the incoming beam can be computed so as to estimate the power fraction of the input beam to each optical mode. If the propagation length is sufficiently large (for example in the case of a polymer optical fibre coupling length could be in the range of 15 m to 25 m), the initial power distribution among modes will change allowing the excitation of all supported modes with equal power. This will generate a featureless Gaussian-like response at the output. On the contrary, in an embodiment where the o-PUF specimen's length is limited, power equilibrium is not achieved and the number of excited modes alongside their power distribution is governed by the initial illumination conditions.

In an embodiment, the aforementioned challenge creating means **105, 503** acts as a secondary coherent light source, where by modifying the characteristics of each element(s) a different challenge is created, namely a different illumination condition at the o-PUF specimen's input facet **203**. These varying illumination conditions (challenges) in turn vary the number of excited modes and their power distribution. Therefore, a different speckle pattern for each challenge is formed at the o-PUF specimen's output. In the case where the o-PUF specimen is a standard limited size core, optical waveguide, then by using the exact illumination conditions and Maxwell's equations a detailed mapping between the input (challenge) and the recorded output (response) can be acquired. Although the relationship between the input-output is deterministic, in the case that the waveguide characteristics allow the propagation of a significant number of optical modes, this analysis is computationally infeasible. The number of modes supported by the waveguide can be computed through $N = 2(NA)^2(\pi R/\lambda)^2$, where $N$ is the number of supported modes, NA is the numerical aperture of the waveguide, R is the core's radius and $\lambda$ the source's wavelength. For example, if the optical waveguide is a standard polymer optical fibre (with core diameter of 980 $\mu$m and 20 $\mu$m cladding) and wavelength at 650 nm is chosen for the coherent light source this formula gives more than $2.5 \times 10^6$ supported transverse optical modes (including polarization degeneracy).

In an embodiment, the o-PUF specimen's input surface, i.e. facet **203,** exhibits random intentional defects like cracks, bubbles, scratches, surfaces' irregularities, impurities, dopants or similar. These defects may have smaller, similar or larger size compared to the wavelength of the incoming coherent light. These defects act as scattering tokens that according to their size evoke either Mie or Rayleigh scattering mechanics, thus enabling a wide range of spatial distributions at the o-PUF specimen's input. This effect, following the aforementioned analysis, will enable the random excitation and random power distribution among the supported transverse modes. In this embodiment, the defects at the input facet will provide a scrambling mechanism that is responsible for the optical spatial distribution recorded at the output (response). In the ideal case that defects are present only at the input facet, then the generated response will be governed by the random illumination condition, through the combination of the challenge creating means-defects, and the propagation length. Although the deterministic nature of the system, i.e. there is unique optical response for any optical challenge, still applies in this embodiment, it is computationally infeasible to solve all the possible optical spatial distributions for each defect at the input facet. This renders this embodiment resilient to modelling attacks.

In an embodiment, the aforementioned defects, are generated through a random mechanical and/or chemical and/or thermal process and/or laser ablation or equivalent procedure. The random process may consist of noise driven: high power laser, heat source or mechanical friction system.

In an embodiment, similar defects, for example bubbles, cracks, etc., are present at the core **202** and/or cladding **201** and/or core-cladding interface of the o-PUF specimen **107, 509** with size similar, smaller or larger than the wavelength of the incoming coherent light. These defects, which are neither reproduceable nor replicable even by their producer, can be the by-product of the waveguide fabrication process or can be induced intentionally. In this embodiment, the internal defects of the optical waveguide act as scattering tokens, which allow the excitation of additional transverse modes and/or the redistribution of the power among the already guided modes (mode-coupling). Therefore, the initial random power distribution is re-scrambled. These defects constitute a second scrambling mechanism that cannot be controlled or even monitored by the manufacturer, therefore further shields the device from modelling attacks.

In an embodiment, intentional or unintentional mechanical micro-bends and/or mechanical micro-stress at the o-PUF specimen change the boundary conditions of the waveguide and therefore alter the guiding properties, thus affecting the optical response.

In an embodiment, similar defects (bubbles, cracks etc.) are present at the output facet of the o-PUF specimen **107, 509** with size similar, smaller or larger than the wavelength of the incoming coherent light. These defects also act as Rayleigh or/and Mie scattering tokens providing random phase and intensity modifications at the guided optical modes. This embodiment is similar to a typical scatter-based PUF illuminated simultaneously by a number of coherent phase locked light sources. In this case, the number of sources is equal to the number of guided modes; furthermore, each source does not have a simple Gaussian like profile but has a complex spatial distribution. Therefore, the proposed device exhibits multiple scrambling mechanisms and increased performance in terms of response complexity compared to previous implementations.

In an embodiment of the device where the o-PUF specimen **107** comprises all the above-mentioned scrambling mechanism (defects at facets and in the core and cladding of the waveguide) the modelling complexity of the device acquires cosmologically large proportions. In detail assuming a polymer optical fibre specimen, with length of 10cm, challenged with a coherent source **101, 501** emitting at 650 nm then approximately $2.5 \times 10^6$ transverse optical modes (including polarization degeneracy) can be guided. Furthermore, assuming that Mie scattering processes dominates the propagation in the o-PUF specimen **107,** then defects with size at least equal to the wavelength $\lambda$ can affect the spatial distribution of light. If we estimate the number of cubic voxels with size of $\lambda$ then each voxel has a volume of $0.274 \times 10^{-18} m^3$, whereas the total volume of the specimen is $31.4 \times 10^{-8}$ m$^3$ (cylindrical shape with radius 1 mm and length 10 cm). Therefore, approximately $115 \times 10^{26}$ different states are included in the specimen **107, 509;** this number is the theoretical simplified material complexity that is acquired by neglecting Rayleigh processes and by assuming that the voxels have only 2 discrete states (present or absent defect). If each voxel can have C available states (affect light's intensity, phase, polarization etc.) then the theoretical material complexity escalates to $(115 \times 10^{26})^C$. Furthermore, this complexity is derived by assuming a single coherent source, while in this device the guiding mechanism allows the excitation of a high number of spatial light distributions (optical modes) that have a constant phase velocity difference (coherent). As a consequence the total size of the modelling problem (complexity) reaches up to $2.5 \times 10^6 \times (115 \times 10^{26})^C$. Even in the simple case where C=1, a potential attacker should solve approximately $10^{38}$ ap. equal to $2^{128}$ Maxwell's equations, a task that is computationally futile.

In an embodiment where the coherent light source's frequency can be tuned, the speckle pattern will vary considerably, due to the frequency dependence of the propagation constant of each mode, therefore distinct speckle patterns will emerge at the optical detector, forming unique optical responses. In this case, distinct challenge-response pairs can be generated by using the coherent light source as a challenge creating means. In an embodiment, the tuneable laser source can be combined with a challenge creating means **105,** as described above, in order to further enlarge the challenge space.

In an embodiment, the spatial overlap of the challenge creating means **105, 503** elements in the o-PUF specimen's facet **203** can be adjusted through either diffraction imaging (Airy disks) or out of focus imaging of each element (pixel). In an embodiment where a single challenge creating means **105, 503** element may distribute power to a certain number of transverse optical modes whose power will be below the threshold of the detector **108, 511** (noise-equivalent power), the interference pattern generated through these modes will not be detected and it won't be part of the optical response. If an additional element of the challenge creating means **105, 503,** that has a strong overlap with the first element, is activated (increase optical intensity, or equivalent method), their combined power may allow the transverse optical modes power to exceed detector's **108, 511** threshold. In this case, the optical response of the system will contain additional features and will not be a linear combination of the responses generated through the individual elements. This feature can be achieved by moving the challenge creating means **105, 503** away from the imaging system **103, 502** (evoke diffraction) or by moving the imaging system away or closer to the o-PUF specimen (out of focus) but keeping the distance between the imaging system **103, 502** and the challenge creating means **105, 503** constant. Through this configuration, the device will provide optical responses for all available challenge creating means elements combinations that will not be linearly dependent, following the analysis mentioned above, and thus the device will be shielded against linear regression attacks.

In an embodiment, the optical response generated by the o-PUF specimen **107, 509** is detected by an optical detector **108, 511** that comprises a charged coupled device (CCD array-matrix or equivalent), a complementary metal-oxide semiconductor (CMOS) camera, or cathode ray tube Vidicon camera, a photo-diode (PD) array-matrix or similar. In an embodiment, the size of the detector's **108, 511** elements is smaller or similar to the size of the speckle pattern's features at a specific predefined distance from the surface of the o-PUF specimen **107, 509,** so as to image all the optical features and preserve complexity. In an embodiment, the challenge creating means **105, 503** can be able to move in one or more directions (axes), through a mechanical/electromechanical system, or a piezoelectric element.

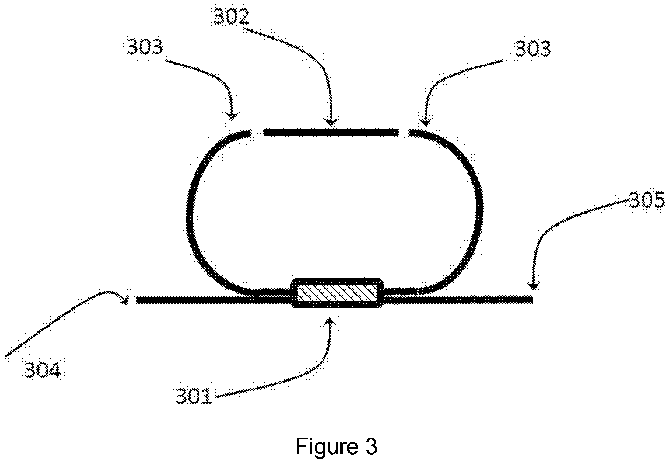

In an embodiment of the disclosed device, the o-PUF specimen comprises an optical cavity, where a possible realization includes a ring cavity similar to a notch optical filter or equivalent. Such a filter is shown schematically in **Figure 3.** A possible realization can be a polymer optical fibre ring cavity. The waveguide properties of this configuration are in accordance to the o-PUF specimen's description presented above. This configuration comprises a 2x2 optical coupler **301** with a predetermined power coupling coefficient r and transmission coefficient τ=1-r. The optical challenge from the challenge creating means, is projected to one arm of the coupler **304,** whereas the optical response is acquired by the other arm **305.** The two remaining arms **303** are connected through a separate multimode waveguide **302.** This embodiment acts as a two-token o-PUF specimen, where the first token comprises the optical coupler **304** and the second is the separate optical waveguide **302.** In this case, the generated response is the product of a multi-pass interaction of the two tokens due to the ring cavity. Taking into consideration that the propagating light is distributed among a high number of optical modes with different propagation constants (optical phase velocities), the optical cavity of this embodiment is not a resonant device. Therefore, assuming that the circumference time in the o-PUF specimen is extremely short (t=c/nL, where c is the speed of light in vacuum, n is the effective refractive index and L is the circumference) compared to the acquisition time of an optical detector, such as the optical detectors **108, 511** included in the embodiments of **Figures 1 and 5,** the recorded optical response comprises the summation of responses from: direct guiding from the one arm **304** to the other arm **305** with a power fraction of τ, the response generated after single pass propagation in the the remaining arms **303** and the waveguide **302** with power proportional to r$^2$, the

response generated through a second pass with power proportional to $r^4$ and so on. Responses originating from multiple passes in the ring cavity at the output will follow an exponential decreasing effect in the final optical response, proportional to the coupling ratio.

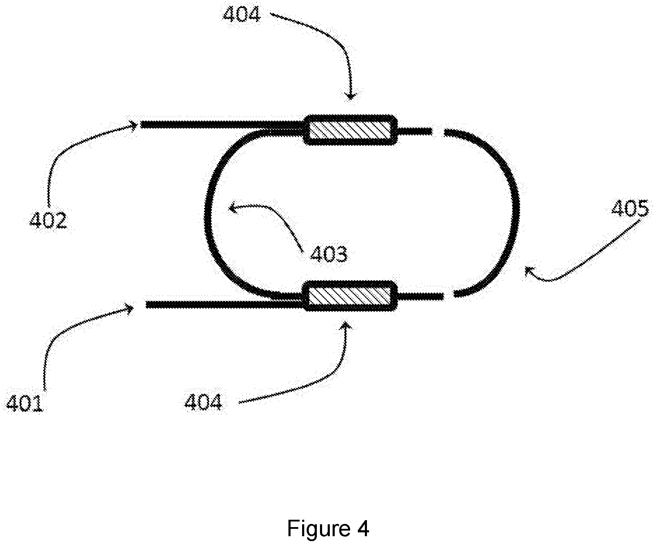

In another embodiment that is shown schematically in **Figure 4**, the o-PUF specimen comprises a ring cavity is configured similar to an add/drop filter **Figure 4.** In this case, the ring cavity comprises two 2x2 optical couplers **404** with predetermined power coupling ratios, that can be identical or different and a multimode optical waveguide **405.** The waveguide properties of this configuration are in accordance to the o-PUF specimen's description presented above. With such a filter, the optical challenge from the challenge creating means **105** is projected to one arm **401** of the first coupler **404,** whereas the optical response is acquired by one arm **402** of the second coupler **404.** In order to form the add/drop cavity two arms **403** of the couplers **404** are connected **403,** whereas the remaining two arms are interconnected through a separate waveguide **405.** This configuration also acts as a two-token o-PUF specimen, where the first token comprises part of the cavity formed by the two couplers **404** the second token by the waveguide **405.** The final acquired optical response at **402** is the summation of responses originating from multiple interactions of the coherent light and the two tokens. The impact of each interaction in the final response is again governed by the coupling ratios but with the major difference that in this case the final response does not include features generated through direct propagation as in the example presented in **Figure 3.**

The two previous ring configurations of the examples of **Figures 3 and 4** enable the acquisition of an optical response, which is the product of a multi-pass interaction inside the optical cavity. Therefore, in the case that part of the cavity is considered a form of a "keyhole", that may be the optical couple **304** in the case of the example of **Figure 3** and the optical couples **404** in the case of the example of **Figure 4,** whereas the independent waveguide parts, i.e. waveguide **302** in the case of the example of **Figure 3** and the waveguide **405** in the case of the example of **Figure 4,** are considered the "key", the combination of these parts enable a system "lock" that is shielded against playback attacks. In the case that a malicious user acquires the "key" and injects light with similar characteristics (light source and challenge creating means) the generated response will not be correlated with the response acquired by the combination of the two parts ("key" and "keyhole"), due to the multi-pass interaction process. Such an embodiment can be used either for physical access systems or cyber authentication. In an embodiment, the same "key" can be combined with different "keyholes" in order to create unique pairs of "locks". Furthermore, the existence of two tokens and the multi-pass configuration radically increases the device physical complexity rendering modelling attacks infeasible.

In an embodiment, that is schematically shown in **Figure 5,** a biometric token 507 like fingerprint, eye iris, vascular micro-pillars, retina, palm print, periocular region or similar, is included between the challenge creating means **503** and the o-PUF specimen **509.** With an embodiment including a biometric token the spatial profile of the optical challenge **505** interacts with the biometric token, prior to transmission in the main o-PUF specimen **509.** In such a configuration, the input **508** to the o-PUFs **509** is the product of the challenge creating means **503** and the biometric token **507.** In detail, light exiting the challenge creating means **503** is send to the biometric token **507,** where light is scattered and/or reflected and/or absorbed by the structural features of the biometric token **507,** through an additional transparent or semi-transparent surface **506.** Thereafter the o-PUF specimen **509,** generates the optical response **510.** In such configuration the optical challenge-optical response pair depends on something that the user has (o-PUF specimen) and on something that the user is (biometric token). Following the above-mentioned analysis, such an embodiment comprises a two-token system, where only the correct combination of biometric **507** and o-PUF specimen **509** provide a valid pair. Such an embodiment increases the physical complexity of the device rendering modelling attacks infeasible.

The method for generating one or more challenge-response pairs is directly related to the previously disclosed device. In detail, the user requires from the device an optical challenge, which is provided by altering the emission characteristics of the coherent light source and/or by modulating the light's spatial characteristics through a challenge creating means. The optical challenge is then fed to the o-PUF specimen **107, 509** which comprises a multimode optical waveguide. A difference of this configuration from the use of typical scatter-based PUF specimen is the simultaneous existence of a high number of random transverse optical modes that interact in the o-PUF specimen **107, 509.** The optical responses are finally acquired by an optical detector and as a consequence challenge-response pairs are generated.

In an embodiment of the method, the o-PUF comprises a two-token scheme that includes two separate multimode waveguides that form an optical cavity and in particular a ring cavity, see **Figure 3 and Figure 4.** A possible embodiment comprises a cavity similar to a notch filter or a cavity similar to an add/drop filter. The generic principle of operation for both embodiments is similar. The optical challenge is generated as mentioned above and projected at the o-PUF specimen's input. The ring configuration of the two-tokens enables the optical challenge to circulate multiple times in the cavity. Therefore, the final optical response, when equilibrium is achieved, will be the product of all the individual optical responses after each circulation. In such an embodiment of the method, the first token of the o-PUF specimen can be considered the "key" and the second part the "keyhole", while the whole system can be regarded as an optical "lock". By using different optical challenges, the system can produce multiple challenge-response pairs similar to the initial method, or the same "key" can be combined with different "keyholes" to produce different "locks". Such an embodiment could part of an authentication scheme, where a single user, having possession of a unique "key", can authenticate him/her in different "keyholes". The major advantage of this embodiment is that is resilient to playback attacks. In case an unauthorized user gains access to the "key" and utilizes a challenge creating means identical to the valid one, the acquired response will vary considerably compared to the actual response generated through the correct key-keyhole combination.

Another embodiment of the method for challenge-response pairs generation includes a two-token scheme, where the first token is a o-PUF specimen (either a single optical waveguide or a ring cavity) and the second comprises a biometric token like fingerprint, eye iris, vascular micro-pillars, retina, palm print, particular region or similar. In this case, the optical challenge generated by the challenge creating means and/or the coherent source is projected to the surface of the biometric token. Through this process, the unique structural features of the token reflect/scatter/absorb the incoming coherent light, further modulating its properties. The modified optical challenge is then fed to the optical waveguide for response generation. In this two-token process a valid challenge-response pair is generated only if the correct combination of biometric and the o-PUF specimen is employed, thus increasing the complexity of the whole security scheme.

In another embodiment, the o-PUF specimen can comprise a ring cavity. In this case, the first optical waveguide can be considered the "keyhole", whereas the biometric token and the second optical waveguide the two independent "keys". A valid challenge-response generation can be achieved only with the correct combination of "keyhole", "key" and biometric token. Furthermore, this configuration radically increases the physical complexity of the system, while at the same time, similar to the simple ring-cavity embodiment, it shields the method from replay-attacks due to the multi-pass interaction process.

The invention provides a device and a method to generate a plurality of optical challenge - optical response pairs that are suitable for authentication and cryptographic key generation. The optical challenge exits the challenge creating means and the optical response is the output of the o-PUF specimen. According to an embodiment of the invention there may be a biometric token between the challenge creating means and the o-PUF specimen, which interacts with the optical challenge before the optical challenge is processed by the o-PUF specimen.

**Claims**

1. Device for generating at least one optical challenge - optical response pair suitable for authentication and cryptographic key generation, the device comprising:

   - a coherent light source **(101, 501),** to generate a coherent light excitation having an intensity, a phase, a polarization and a spatial distribution
   - challenge creating means **(105, 503)** configured to alter the intensity and/or the phase and/or the polarization and/or the spatial distribution of the coherent light to create an optical challenge,
   - first imaging means **(103, 502)** configured to guide the coherent light at the challenge creating means **(105, 503),**
   - an optical Physical Unclonable Function specimen **(107, 509)** with a multimode optical waveguide having an input facet **(203),** which optical Physical Unclonable Function specimen **(107, 509)** is configured to generate an optical response, through propagation of the optical challenge and excitation of random transverse optical modes suitable for authentication and cryptographic key generation in the waveguide,
   - second imaging means **(106, 504)** configured to guide the optical challenge at the optical Physical Unclonable Function specimen **(107, 509),** and
   - an optical detector **(108, 511)** configured to detect the spatial profile and intensity of the optical response, the device being **characterised in that** the the input facet of the multimode optical waveguide has random defects.

2. Device **according to claim 1,** whereby the coherent light source **(101)** is configured to emit simultaneously at one or more centre frequencies.

3. Device **according to claim 1 or claim 2,** whereby the first imaging means **(103, 502)** is configured to project and/or resize the spatial profile of the coherent light excitation on a surface of the challenge creating means **(105, 503).**

4. Device **according to any one of claims 1 to 3,** whereby the challenge creating means **(105, 503)** comprises one or more distinct elements or pixels, configured to affect the intensity and/or the phase and/or the polarization and/or the spatial distribution of the coherent light excitation, preferably the intensity and/or the polarization and/or the spatial distribution and/or the amplitude and/or the propagation direction of the coherent light excitation.

5. Device **according to any one of claims 1 to 4,** whereby the second imaging means **(105, 503)** is configured to project and/or resize the optical challenge to the optical Physical Unclonable Function specimen **(107, 509).**

6. Device **according to any one of claims 1 to 5,** whereby the waveguide contains impurities and/or dopants and whereby the optical Physical Unclonable Function specimen **(107, 509)** is configured so that the propagation of the optical challenge through it generates an optical response that in combination with the optical challenge is a unique pair.

7. Device **according to any one of claims 1 to 6,** whereby the waveguide has a core **(202)** and a cladding **(201)** and whereby the core **(202)** and/or the cladding **(201)** and/or an interface of the core **(202)** and the cladding **(201)** contains random structural defects and/or impurities and/or dopants.

8. Device **according to any one of claims 1 to 7,** whereby the optical Physical Unclonable Function specimen comprises a ring cavity, preferably an add-drop filter, with an optical coupler **(301, 404).**

9. Device **according to claim 8,** whereby the ring cavity comprises an optical waveguide **(302, 405)** other than the optical coupler **(301, 404),** said optical waveguide **(302, 405)** being a replaceable key.

10. Device **according to any one of claims 1 to 9,** including means to input a biometric token **(507)** between the challenge creating means **(503)** and the optical Physical Unclonable Function specimen **(509),** which means to input a biometric token **(507)** is in a position to interact with the optical challenge, for example by reflection and/or scattering and/or absorption with it, prior to transmission of the optical challenge in the optical Physical Unclonable Function specimen **(509).**

11. Device **according to any one of claims 1 to 10,** whereby the optical detector **(108, 511)** comprises one or more elements configured to partially or completely capture the spatial profile of the optical response that exits the optical Physical Unclonable Function specimen **(107, 509).**

12. Method for generating at least one challenge-response pair comprising the steps of:

    - generating a coherent light excitation with a coherent light source **(101, 501),**
    - creating an optical challenge by illuminating at least part of a challenge creating means **(105, 503)** with the coherent light,
    - imaging the optical challenge to an input element **(203)** of an optical Physical Unclonable Function specimen with a multimode optical waveguide **(107, 509)** having an input facet **(203),**
    - creating an optical response by transmission of the optical challenge through the optical Physical Unclonable Function specimen **(107, 509)** and by excitation of random transverse optical modes,
    - detecting all or part of the response by an optical detector **(108, 511),**
    - establishing a challenge-response pair that is suitable for authentication and cryptographic key generation, the method being **characterised in that** the input facet of the multimode optical waveguide comprises random defects.

13. Method **according to** claim **12,** using the device **of any one of claims 1 to 11.**

14. Method of production of a device according to any one of claim 1 to 11, whereby the device comprises an optical Physical Unclonable Function specimen with an optical multimode waveguide and whereby the method includes a) providing a coherent light source and a multimode optical waveguide with facets, a core, a cladding and a core-cladding interface, b) generating random defects to said facets and optionally to said core and/or said cladding and/or said core-cladding interface by a mechanical process and/or chemical process and/or thermal process and/or laser ablation and c) obtaining the device that includes said coherent light source **(101, 501)** and said waveguide.

### Patentansprüche

1. Vorrichtung zum Erzeugen mindestens eines Paares aus optischer Herausforderung

    - optischer Antwort, das zur Authentifizierung und Erzeugung kryptographischer Schlüssel geeignet ist, wobei die Vorrichtung umfasst:

        - eine kohärente Lichtquelle **(101, 501),** um eine kohärente Lichtanregung zu erzeugen, die eine Intensität, eine Phase, eine Polarisation und eine räumliche Verteilung aufweist,
        - Herausforderungserzeugungsmittel **(105, 503),** die so konfiguriert sind, dass sie die Intensität und/oder die Phase und/oder die Polarisation und/oder die räumliche Verteilung des kohärenten Lichts ändern, um eine optische Herausforderung zu erzeugen,
        - erste Abbildungsmittel **(103, 502),** die so konfiguriert sind, dass sie das kohärente Licht auf die Herausforderungserzeugungsmittel **(105, 503)** lenken,

- ein optisches Physical Unclonable Function-Exemplar **(107, 509)** mit einem optischen Multimoden-Wellenleiter, der eine Eingangsfacette **(203)** aufweist, wobei das optische Physical Unclonable Function-Exemplar **(107, 509)** so konfiguriert ist, dass es durch Ausbreitung der optischen Herausforderung und Anregung zufälliger optischer Transversalmodi, die für die Authentifizierung und Erzeugung kryptographischer Schlüssel im Wellenleiter geeignet sind, eine optische Antwort erzeugt,

- zweite Abbildungsmittel **(106, 504),** die so konfiguriert sind, dass sie die optische Herausforderung auf das optische Physical Unclonable Function-Exemplar **(107, 509)** lenken, und

- einen optischen Detektor **(108, 511),** der so konfiguriert ist, dass er das räumliche Profil und die Intensität der optischen Antwort detektiert, wobei die Vorrichtung **dadurch gekennzeichnet ist, dass** die Eingangsfacette des optischen Multimoden-Wellenleiters zufällige Defekte aufweist.

2. Vorrichtung **nach Anspruch 1,** wobei die kohärente Lichtquelle **(101)** so konfiguriert ist, dass sie gleichzeitig auf einer oder mehreren Mittenfrequenzen emittiert.

3. Vorrichtung **nach Anspruch 1 oder Anspruch 2,** wobei das erste Abbildungsmittel **(103, 502)** so konfiguriert ist, dass es das räumliche Profil der kohärenten Lichtanregung auf eine Oberfläche der Herausforderungserzeugungsmittel **(105, 503)** projiziert und/oder in der Größe ändert.

4. Vorrichtung **nach einem der Ansprüche 1 bis 3,** wobei die Herausforderungserzeugungsmittel **(105, 503)** ein oder mehrere getrennte Elemente oder Pixel umfassen, die so konfiguriert sind, dass sie die Intensität und/oder die Phase und/oder die Polarisation und/oder die räumliche Verteilung der kohärenten Lichtanregung, bevorzugt die Intensität und/oder die Polarisation und/oder die räumliche Verteilung und/oder die Amplitude und/oder die Ausbreitungsrichtung der kohärenten Lichtanregung beeinflussen.

5. Vorrichtung **nach einem der Ansprüche 1 bis 4,** wobei das zweite Abbildungsmittel **(105, 503)** so konfiguriert ist, dass es die optische Herausforderung auf das optische Physical Unclonable Function-Exemplar **(107, 509)** projiziert und/oder in der Größe ändert.

6. Vorrichtung **nach einem der Ansprüche 1 bis 5,** wobei der Wellenleiter Verunreinigungen und/oder Dotierstoffe enthält, und wobei das optische Physical Unclonable Function-Exemplar **(107, 509)** so konfiguriert ist, dass die Ausbreitung der optischen Herausforderung durch es hindurch eine optische Antwort erzeugt, die in Kombination mit der optischen Herausforderung ein eindeutiges Paar ist.

7. Vorrichtung **nach einem der Ansprüche 1 bis 6,** wobei der Wellenleiter einen Kern **(202)** und einen Mantel **(201)** aufweist und wobei der Kern **(202)** und/oder der Mantel **(201)** und/oder eine Grenzfläche des Kerns **(202)** und des Mantels **(201)** zufällige Strukturdefekte und/oder Verunreinigungen und/oder Dotierstoffe enthält.

8. Vorrichtung **nach einem der Ansprüche 1 bis 7,** wobei das optische Physical Unclonable Function-Exemplar einen Ringhohlraum, bevorzugt einen Add-Drop-Filter, mit einem optischen Koppler **(301, 404)** umfasst.

9. Vorrichtung **nach Anspruch 8,** wobei der Ringhohlraum einen anderen optischen Wellenleiter **(302, 405)** als den optischen Koppler **(301, 404)** umfasst, wobei der optische Wellenleiter **(302, 405)** ein austauschbarer Schlüssel ist.

10. Vorrichtung **nach einem der Ansprüche 1 bis 9,** die Mittel zum Eingeben eines biometrischen Tokens **(507)** zwischen den Herausforderungserzeugungsmitteln **(503)** und dem optischen Physical Unclonable Function-Exemplar **(509)** beinhaltet, wobei die Mittel zum Eingeben eines biometrischen Tokens **(507)** in der Lage sind, mit der optischen Herausforderung zu interagieren, zum Beispiel durch Reflexion und/oder Streuung und/oder Absorption mit dieser vor der Übertragung der optischen Herausforderung im optischen Physical Unclonable Function-Exemplar **(509).**

11. Vorrichtung **nach einem der Ansprüche 1 bis 10,** wobei der optische Detektor **(108, 511)** ein oder mehrere Elemente umfasst, die so konfiguriert sind, dass sie das räumliche Profil der optischen Antwort, die aus dem optischen Physical Unclonable Function-Exemplar **(107, 509)** austritt, teilweise oder vollständig erfassen.

12. Verfahren zum Erzeugen mindestens eines Paares aus Herausforderung-Antwort, das die folgenden Schritte umfasst:

   - Erzeugen einer kohärenten Lichtanregung mit einer kohärenten Lichtquelle **(101, 501),**
   - Erzeugen einer optischen Herausforderung durch Beleuchten mindestens eines Teils eines Herausforderungserzeugungsmittels **(105,**

**503)** mit dem kohärenten Licht,
- Abbilden der optischen Herausforderung auf ein Eingangselement **(203)** eines optischen Physical Unclonable Function-Exemplars mit einem optischen Multimoden-Wellenleiter **(107, 509),** der eine Eingangsfacette **(203)** aufweist,
- Erzeugen einer optischen Antwort durch Übertragung der optischen Herausforderung durch das optische Physical Unclonable Function-Exemplar **(107, 509)** und durch Anregung zufälliger optischer Transversalmodi,
- Detektieren der gesamten oder eines Teils der Antwort durch einen optischen Detektor **(108, 511),**
- Erstellen eines Paars aus Herausforderung-Antwort, das zur Authentifizierung und Erzeugung kryptographischer Schlüssel geeignet ist, wobei das Verfahren **dadurch gekennzeichnet ist, dass** die Eingangsfacette des optischen Multimoden-Wellenleiters zufällige Defekte umfasst.

13. Verfahren **nach** Anspruch **12,** das die Vorrichtung **nach einem der Ansprüche 1 bis 11** verwendet.

14. Verfahren zur Herstellung einer Vorrichtung nach einem der Ansprüche 1 bis 11, wobei die Vorrichtung ein optisches Physical Unclonable Function-Exemplar mit einem optischen Multimoden-Wellenleiter umfasst und wobei das Verfahren beinhaltet a) Bereitstellen einer kohärenten Lichtquelle und eines optischen Multimoden-Wellenleiters mit Facetten, einem Kern, einem Mantel und einer Kern-Mantel-Grenzfläche, b) Erzeugen von zufälligen Defekten an den Facetten und gegebenenfalls am Kern und/oder dem Mantel und/oder der Kern-Mantel-Grenzfläche durch einen mechanischen Prozess und/oder chemischen Prozess und/oder thermischen Prozess und/oder Laserablation und c) Erhalten der Vorrichtung, die die kohärente Lichtquelle **(101, 501)** und den Wellenleiter beinhaltet.

**Revendications**

1. Dispositif de génération d'au moins une paire défi optique - réponse optique adaptée pour une authentification et une génération de clé cryptographique, le dispositif comprenant :

   - une source de lumière cohérente **(101, 501),** pour générer une excitation de lumière cohérente présentant une intensité, une phase, une polarisation et une distribution spatiale
   - des moyens de création de défi **(105, 503)** configurés pour modifier l'intensité et/ou la phase et/ou la polarisation et/ou la distribution spatiale de la lumière cohérente afin de créer un défi optique,
   - des premiers moyens d'imagerie **(103, 502)** configurés pour guider la lumière cohérente au niveau des moyens de création de défi **(105, 503),**
   - un spécimen optique de fonction physique non clonable **(107, 509)** avec un guide d'ondes optique multimode présentant une facette d'entrée **(203),** lequel spécimen optique de fonction physique non clonable **(107, 509)** est configuré pour générer une réponse optique, par propagation du défi optique et excitation de modes optiques transversaux aléatoires adaptés à l'authentification et à la génération de clé cryptographique dans le guide d'ondes,
   - des seconds moyens d'imagerie **(106, 504)** configurés pour guider le défi optique au niveau du spécimen optique de fonction physique non clonable **(107, 509),** et
   - un détecteur optique **(108, 511)** configuré pour détecter le profil spatial et l'intensité de la réponse optique, le dispositif étant **caractérisé en ce que** la facette d'entrée du guide d'ondes optique multimode présente des défauts aléatoires.

2. Dispositif **selon** la **revendication 1,** dans lequel la source de lumière cohérente (101) est configurée pour émettre simultanément à une ou plusieurs fréquences centrales.

3. Dispositif **selon la revendication 1 ou 2,** dans lequel les premiers moyens d'imagerie **(103, 502)** sont configurés pour projeter et/ou redimensionner le profil spatial de l'excitation de lumière cohérente sur une surface des moyens de création de défi **(105, 503).**

4. Dispositif **selon l'une quelconque des revendications 1 à 3,** dans lequel les moyens de création de défi **(105, 503)** comprennent un ou plusieurs éléments ou pixels distincts, configurés pour affecter l'intensité et/ou la phase et/ou la polarisation et/ou la distribution spatiale de l'excitation de lumière cohérente, de préférence l'intensité et/ou la polarisation et/ou la distribution spatiale et/ou l'amplitude et/ou la direction de propagation de l'excitation de lumière cohérente.

5. Dispositif **selon l'une quelconque des revendications 1 à 4,** dans lequel les seconds moyens d'imagerie **(105, 503)** sont configurés pour projeter et/ou redimensionner le défi optique du spécimen optique de fonction physique non clonable **(107, 509).**

6. Dispositif **selon l'une quelconque des revendications 1 à 5,** dans lequel le guide d'ondes contient des impuretés et/ou des dopants et dans lequel le spécimen optique de fonction physique non clonable **(107, 509)** est configuré de telle sorte que la propagation du défi optique à travers lui génère une réponse optique qui, en combinaison avec le défi optique, constitue une paire unique.

7. Dispositif **selon l'une quelconque des revendications 1 à 6,** dans lequel le guide d'ondes présente un noyau **(202)** et une gaine **(201)** et dans lequel le noyau **(202)** et/ou la gaine **(201)** et/ou une interface entre le noyau **(202)** et la gaine **(201)** contient des défauts structurels aléatoires et/ou des impuretés et/ou des dopants.

8. Dispositif **selon l'une quelconque des revendications 1 à 7,** dans lequel le spécimen optique de fonction physique non clonable comprend une cavité annulaire, de préférence un filtre d'insertion-extraction, avec un coupleur optique **(301, 404).**

9. Dispositif **selon la revendication 8,** dans lequel la cavité annulaire comprend un guide d'ondes optique **(302, 405)** autre que le coupleur optique **(301, 404),** ledit guide d'ondes optique **(302, 405)** étant une clé remplaçable.

10. Dispositif **selon l'une quelconque des revendications 1 à 9,** comprenant des moyens pour entrer un jeton biométrique **(507)** entre les moyens de création de défi **(503)** et le spécimen optique de fonction physique non clonable **(509),** lesquels moyens pour entrer un jeton biométrique ( **507)** sont en mesure d'interagir avec le défi optique, par exemple par réflexion et/ou diffusion et/ou absorption avec celui-ci, avant une transmission du défi optique dans le spécimen optique de fonction physique non clonable **(509).**

11. Dispositif **selon l'une quelconque des revendications 1 à 10,** dans lequel le détecteur optique **(108, 511)** comprend un ou plusieurs éléments configurés pour capturer partiellement ou complètement le profil spatial de la réponse optique qui sort du spécimen optique de fonction physique non clonable**(107, 509).**

12. Procédé pour générer au moins une paire défi-réponse, comprenant les étapes suivantes :

   - générer une excitation de lumière cohérente avec une source de lumière cohérente **(101, 501),**
   - créer un défi optique en éclairant au moins une partie de moyens de création de défi **(105, 503)** avec la lumière cohérente,
   - imager le défi optique sur un élément d'entrée **(203)** d'un spécimen optique de fonction physique non clonable avec un guide d'ondes optique multimode **(107, 509)** présentant une facette d'entrée **(203),**
   - créer une réponse optique par transmission du défi optique à travers le spécimen optique de fonction physique non clonable **(107, 509)** et par excitation de modes optiques transversaux aléatoires,
   - détecter tout ou partie de la réponse par l'intermédiaire d'un détecteur optique **(108, 511),**
   - établir une paire défi-réponse qui est adaptée à une authentification et à une génération de clé cryptographique, le procédé étant **caractérisé en ce que** la facette d'entrée du guide d'ondes optique multimode comprend des défauts aléatoires.

13. Procédé **selon** la revendication **12,** à l'aide du dispositif **selon l'une quelconque des revendications 1 à 11.**

14. Procédé de production d'un dispositif selon l'une quelconque des revendications 1 à 11, dans lequel le dispositif comprend un spécimen optique de fonction physique non clonable avec un guide d'ondes optique multimode et dans lequel le procédé inclut les étapes consistant à a) fournir une source de lumière cohérente et un guide d'ondes optique multimode avec des facettes, un noyau, une gaine et une interface noyau-gaine, b) générer des défauts aléatoires sur lesdites facettes et facultativement sur ledit noyau et/ou ladite gaine et/ou ladite interface noyau-gaine par un processus mécanique et/ou un processus chimique et/ou un processus thermique et/ou une ablation laser et c) obtenir le dispositif qui inclut ladite source de lumière cohérente **(101, 501)** et ledit guide d'ondes.

Figure 1

Figure 2

EP 3 658 970 B1

Figure 3

16

Figure 4

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007046018 A
- WO 2007046018 A1
- US 20060095773 A
- WO 2005059629 A
- WO 9828707 A
- EP 2693685 A
- WO 2007046037 A
- US 20150215115 A

### Non-patent literature cited in the description

- Physical One-Way Functions. **PAPPU, R.** PhD thesis. MIT, 2001
- **PAPPU, R. ; RECHT, B. ; TAYLOR, J. ; GERSHENFELD, N.** Physical One-Way Functions. *Science,* 2002, vol. 297, 2026-2030
- **BUCHANAN, J. D. R. ; COWBURN, R. P. ; JAUSOVEC, A. ; PETIT, D. ; SEEM, P. ; XIONG, G. ; ATKINSON, D. ; FENTON, K. ; ALLWOOD, D.A. ; BRYAN, M. T.** Forgery: 'fingerprinting' documents and packaging. *Nature, Brief Communications,* 2005, vol. 436, 475
- **RÜHRMAIR, ULRICH et al.** Revisiting Optical Physical Unclonable Functions. *IACR Cryptology ePrint Archive,* 2013, vol. 2013, 215
- Anti-counterfeiting with a random pattern. **CHONG, C. N. ; JIANG, D. ; ZHANG, J. ; GUO, L.** SECURWARE. IEEE, 2008, 146-153
- **SMITH, A. F. ; PATTON, P. ; SKRABALAK, S. E.** Plasmonic Nanoparticles as a Physically Unclonable Function for Responsive Anti-Counterfeit Nanofingerprints. *Adv. Funct. Mater.,* 2016, vol. 26, 1315-1321
- **MOUSSA N' GOM ; THEODORE B. NORRIS ; ERIC MICHIELSSEN ; RAJ RAO NADAKUDITI.** Non-Holographic Method to Compute Transmission Matrix of a Multimode Fiber for Mode Control. *Frontiers in Optics,* 2017
- **BRÜNING, R. ; FLAMM, D. ; NGCOBO, S.S. ; FORBES, A. ; DUPARRÉ, M.** Rapid measurements of the fiber's transmission matrix. *Proc. SPIE 9389, Next-Generation Optical Communication: Components, SubSystems and Systems,* 07 February 2015, vol. IV, 93890N
- **AMITONOVA et al.** *Optics Express,* 2015, vol. 20, 20569-20575